# EUROPEAN PATENT SPECIFICATION

(11) **EP 2 526 033 B1**
(45) Date of publication and mention of the grant of the patent: **16.07.2014**
(21) Application number: 12705787.5
(22) Date of filing: 02.02.2012
(51) Int. Cl.: B65G 21/06, A47F 9/04, B64F 1/36

(54) **CONVEYOR SYSTEM**
FÖRDERSYSTEM
SYSTÈME DE TRANSPORTEUR

(30) Priority: 02.02.2011 DK 201170058
(43) Date of publication of application: 28.11.2012
(73) Proprietor: Interroll Holding AG, 6592 Sant' Antonino (CH)
(72) Inventor: HENRIKSEN, Flemming, Sperling, DK-8382 Hinnerup (DK)
(74) Representative: Müller-Boré & Partner Patentanwälte PartG mbB
(86) International application number: PCT/EP2012/000480
(87) International publication number: WO 2012/104092

(56) References cited:
- EP-A1- 0 548 661
- EP-A1- 0 842 712

## Description

### Field of the invention

The present invention relates to a conveyor system as stated in the preamble of claim 1, for use, for instance, in check-out counters in grocery stores or supermarkets, in security control counters in airports and the like.

### Background of the invention

Different kinds of counter systems comprising conveyor systems with one or more conveyor belts are used in grocery stores, supermarkets, airports and many other places all over the world.

Although such conveyor systems do not normally require to be serviced very often during the lifetime of the system, it is a well-known problem that service and maintenance work and replacement of parts of such conveyor systems can be rather cumbersome and time-consuming as it is often necessary to disassemble the conveyor system into many parts in order to get access to the parts needing maintenance or replacement.

This means that, when service or maintenance is needed, the counter systems can be out of function for relatively long periods of time causing undue inconvenience for the salespersons and service assistants as well as for the customers and lack of income for the persons or organisations making use of such counter systems.

A further aspect of this problem is that there is an increasing use of conveyor belts carrying advertisements of one kind or the other. This means that the conveyor belts need to be changed more often than just for service and maintenance purposes, as most of such advertisements are frequently replaced by other ones.

US Patent No. 7,806,254 (Brayman et al.) discloses a conveyor system aimed at overcoming some of these problems, which conveyor system comprises a number of removable belt modules that can be individually lifted off a supporting framework. In order to make the individual belt modules portable, the maximum weight and, thus, the maximum length of each belt module is limited and a plurality of belt modules must be placed in series if conveyance is needed over a longer distance. A problem of this solution is therefore that there will inevitably be a gap between the conveyor belts of each of the individual belt modules in which smaller goods or, in the worst case, even fingers may be caught and squeezed. Another problem is that service and maintenance work cannot be performed on the belt modules without first removing them from the conveyor system.

Another solution is disclosed in US Patent No. 4,474,288 (Majewski) in which a self-contained conveyor module can be extracted from a check-out counter assembly in its longitudinal direction. Again, in order to get full access to the conveyor module for service and maintenance, the conveyor module needs first to be removed from the check-out counter assembly and placed somewhere else.

Further the EP 0 842 712 A1 discloses a conveyor system according to the preamble of claim 1, comprising a plurality of main conveyance units with respective conveyor belts. Each one of said main conveyance units of the conveyor has a frame for supporting the respective conveyor belt which is supported so that it is cantilevered from one side of the base structure, or table, to allow to fit and remove said belt at the other side of the table, which has no supports interfering with said belt.

It is an object of the present invention to provide a conveyor system, which substantially reduces the work load and the time consumption related to service and maintenance work without the disadvantages related to the systems described above.

### Brief description of the invention

The present invention relates to a conveyor system comprising a system framework, a covering and a conveyor module comprising a frame, a drive pulley rotatably supported by the frame, an idler pulley rotatably supported by the frame and a continuous conveyor belt mounted around the drive pulley and the idler pulley for being rotated when the drive pulley is rotated, the conveyor module and the covering being mounted on the system framework and, when the conveyor system is in an operational mode, the covering being placed adjacent to the conveyor module covering at least the two sides of the conveyor module parallel to the direction of conveyance of the conveyor belt, characterized in that the conveyor module is detachably mounted on two or more substantially parallel bars penetrating the frame in such a way that the conveyor module can be removed as a whole from the bars, wherein

One end of each of the substantially parallel bars is connected to a first end of a respective lever arm, a second end of which lever arm is connected to the system framework in such a way that, when each of the lever arms is in a first position, the conveyor system is in an operational mode and, when each of the lever arms is in a second position, the conveyor system is in a service mode in which the conveyor module is elevated in relation to the covering, thus opening for sideways access to the conveyor module for maintenance work or for replacement of the conveyor module as a whole, all of the lever arms being positioned to the same side of the conveyor module.

Lifting the conveyor module up from the level of the covering while supporting the conveyor module only from one of its sides is a very fast and easy way of putting the conveyor system in a service mode in which there is free access to the conveyor module for maintenance work or even replacement of the complete conveyor module.

In this way, a conveyor system is provided, wherein one or more parts of a conveyor module, such as conveyor belt, pulleys and drum motor, or even a complete conveyor module can easily and fast be replaced manually or, in case of larger and heavier conveyor modules with longer conveyor belts, by means of some sort of lifting device. Apart from replacements of parts due to ordinary service and maintenance purposes, a conveyor belt carrying an advertisement may need to be replaced by a belt carrying another advertisement, and complete conveyor modules may be switched between different conveyor systems of a larger system, for instance in a supermarket, in order to "distribute" the lifetime of the different components of the larger system equally, although some of the conveyor systems may be used more than others. Also, a system like this facilitates easy and fast cleaning of the conveyor module.

It should be noted that the covering may include one or more tabletops in the form of substantially horizontal and upward facing surfaces next to the conveyor belt on one or more sides thereof.

In an embodiment of the invention, the substantially parallel bars are substantially horizontal.

Using substantially parallel bars enables for the possibility that the conveyor module can be dismounted from or mounted on the bars by simply sliding it in the longitudinal direction of the bars.

In an embodiment of the invention, the substantially parallel bars are oriented in a direction substantially perpendicular to the direction of conveyance of the conveyor belt.

Mounting the conveyor module on bars oriented substantially perpendicular to the conveyor module reduces the distance over which the conveyor module must be moved in order to get the frame of the conveyor module free of the bars.

In an embodiment of the invention, the drive pulley is driven by a drum motor arranged inside the drive pulley.

Using a drum motor for driving the drive pulley means that no drive belts are needed between the drive pulley and an external motor and that the conveyor module needs only to be connected to the rest of the conveyor system through a relatively simple electric cable providing the power for the drum motor. For some applications, a direction signal indicating in which direction the pulley should rotate may also be needed.

In an embodiment of the invention, the motion of the lever arms between their first and second positions is performed using one or more pneumatic springs and/or linear actuators.

Pneumatic springs and linear actuators are well-known and reliable means for moving lever systems between two or more predefined positions.

In an embodiment of the invention, the frame is provided with one or more individually adjustable supporting legs on both sides of the conveyor belt for enabling vertical alignment of the conveyor belt when the conveyor system is in an operational mode.

Due to production tolerances and the fact that the part of the system framework onto which the conveyor module rests during normal operation may be twisted or displaced slightly during installation and/or operation of the conveyor system, it is advantageous that the conveyor module is provided with a plurality of individually adjustable legs for adjusting and controlling the conveyor module so that a perfectly horizontal upper surface and a correct vertical alignment of the conveyor belt can be obtained.

In an embodiment of the invention, the one or more supporting legs on the side of the frame opposite the lever arms are shortened in order to enable removal of the conveyor belt from the conveyor module without first removing the supporting legs, each of these shortened supporting legs standing, when the conveyor system is in an operational mode, on a respective supporting platform of the system framework arranged in such a way that, by suitable adjustment of the supporting legs, resulting heights of the shortened supporting legs and the respective supporting platforms corresponding to the heights of the non-shortened supporting legs at the other side of the frame can be obtained.

In this way it is assured that the conveyor belt can be removed from the two pulleys without being obstructed by the supporting legs.

In an embodiment of the invention, the supporting platforms are formed by bars being rotationally coupled at one end to the lever arms so that when the lever arms are rotated to their second positions, bringing the conveyor system into a service mode, the supporting platforms are rotated away from the conveyor module, in order not to be in the way for maintenance work or for replacement of the conveyor module as a whole.

Rotating the supporting platforms away from the conveyor module when putting the conveyor system in a service mode increases the access possibilities to the conveyor module for service or maintenance work or replacement of the conveyor module.

In another embodiment of the invention, the conveyor system can be brought to a service mode by lifting the covering off the system framework, thus opening for sideways access to the conveyor module for maintenance work or for replacement of the conveyor module as a whole.

This embodiment represents another simple way of putting the conveyor system in a service mode with free access to the conveyor module for service or maintenance work or replacement of the conveyor module.

In another aspect of the invention, it relates to a counter system comprising a conveyor system as described above.

A few exemplary embodiments of the invention will be described in the following with reference to the figures, of which
- fig. 1a: is a perspective view of a part of a conveyor system according to an embodiment of the invention, wherein the conveyor system is in an operational mode,
- fig. 1b: is a perspective view of the same part of a conveyor system as illustrated in fig. 1a, wherein the conveyor system is in a service mode,
- fig. 2: is an end view of the same part of a conveyor system in service mode as illustrated in fig. 1b,
- fig. 3: is a side view of the same part of a conveyor system in service mode as illustrated in figs. 1b and 2,
- fig. 4a: is a perspective view from one side of a conveyor module and a lever system of a conveyor system according to the same embodiment of the invention illustrated in figs. 1a-3,
- fig. 4b: is a perspective view from another side of the same conveyor module and lever system as illustrated in fig. 4a,

### Detailed description of the invention

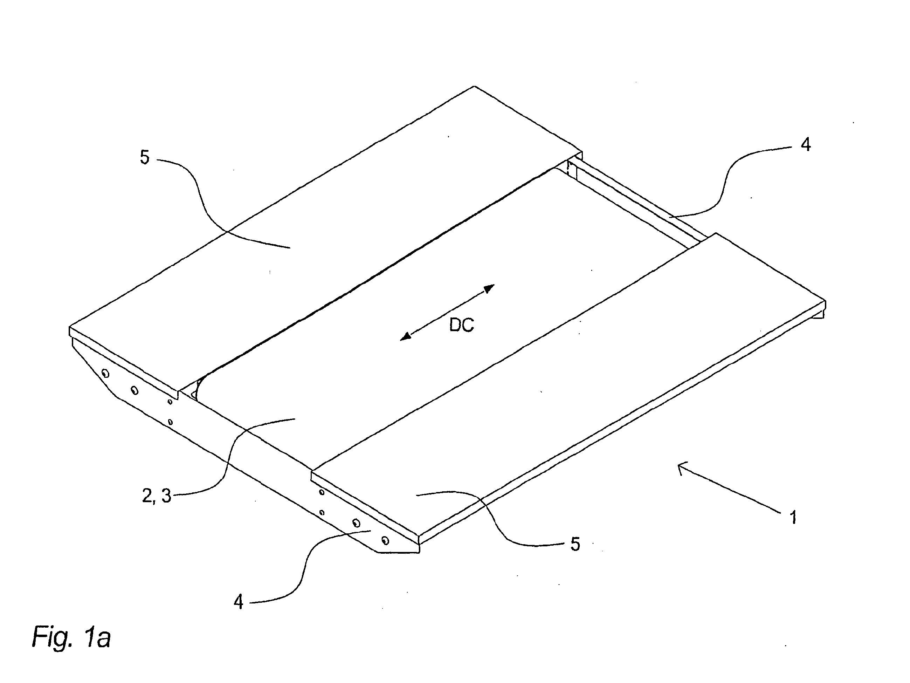

Fig. 1a is a perspective view of a part of a conveyor system 1 according to a preferred embodiment of the invention, wherein the conveyor system I is in an operational mode.

A conveyor module 2 with a conveyor belt 3 is mounted in a system framework 4 of which only a part is shown in the figure. Also mounted on this system framework 4 is a covering 5 including a tabletop 5 on each side of the conveyor belt 3. The direction of conveyance DC of the conveyor belt 3 is indicated with an arrow in this and some of the following figures.

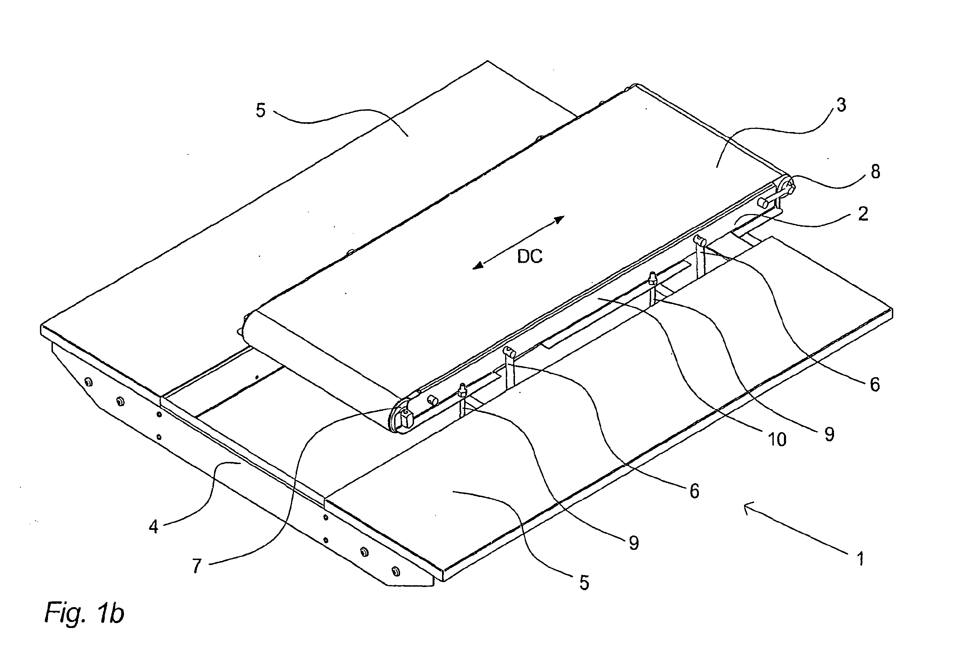

The same part of a conveyor system 1 is shown in fig. 1b in a service mode, in which the conveyor module 2 is elevated from the level of the tabletops 5 by means of two lever arms 6. This figure also illustrates how the conveyor belt 3 is mounted around a drive pulley 7 and an idler pulley 8. In this preferred embodiment, the drive pulley 7 is provided with an internal drum motor (not shown) so that no drive belts are needed between the drive pulley 7 and an external motor, and the conveyor module 2 needs only to be connected to the rest of the conveyor system 1 through a relatively simple electric cable (not shown) providing the power for the drum motor and a direction signal indicating in which direction the drive pulley 7 should rotate

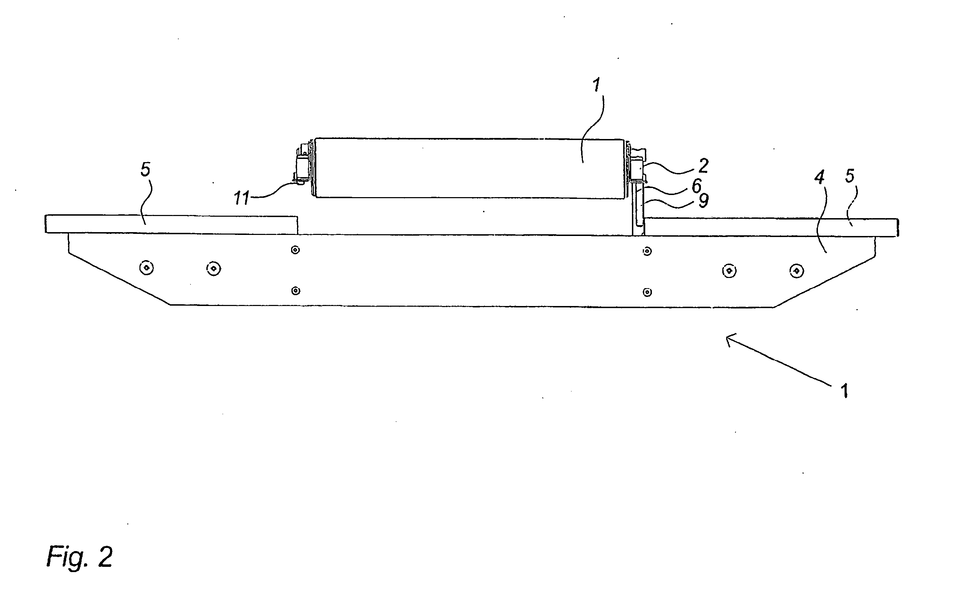

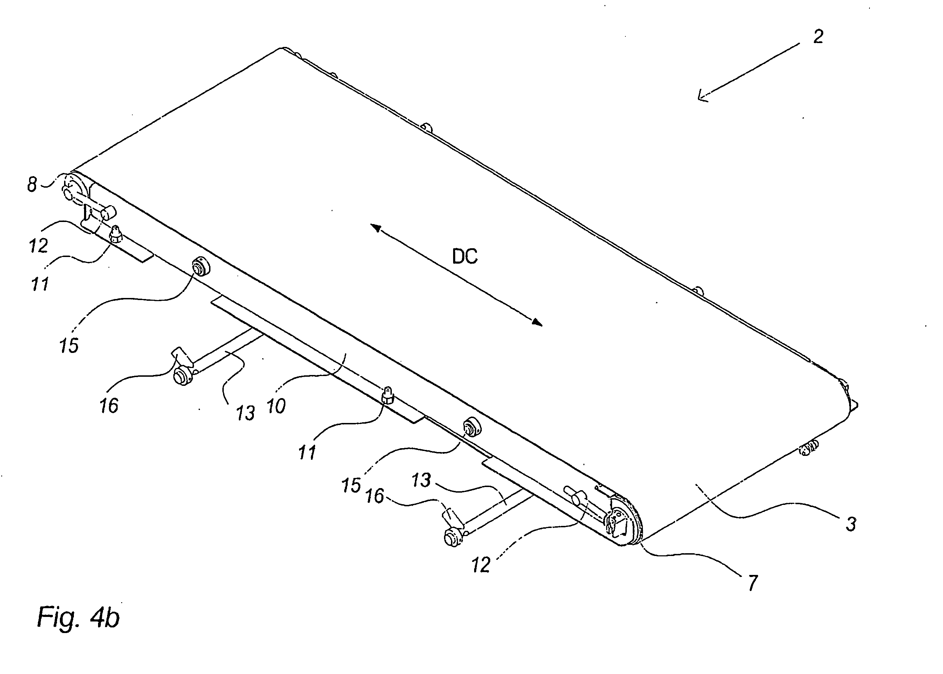

Two adjustable supporting legs 9 are mounted on the visible side of the frame 10 of the conveyor module 2. These adjustable supporting legs 9 and other adjustable supporting legs 11 (shown in figs. 2, 4b and 4c) on the other side of the conveyor belt 3 are used for obtaining a perfectly horizontal upper surface and a correct vertical alignment of the conveyor module 2, which can be necessary due to production tolerances and the fact that the part of the system framework 4 onto which the conveyor module 2 rests during normal operation may be twisted or displaced slightly during installation and/or operation of the conveyor system 1.

Fig. 2 is an end view of the same part of a conveyor system 1 in a service mode as illustrated in fig. 1b. In this view is also seen the adjustable supporting legs 11 on the side of the conveyor module 2 opposite the lever arms 6 is substantially shorter than the adjustable supporting legs 9 on the other side. This enables for pulling the conveyor belt 3 sideways off the two pulleys 7, 8 without first removing the adjustable supporting legs 11 from the side opposite the lever arms 6.

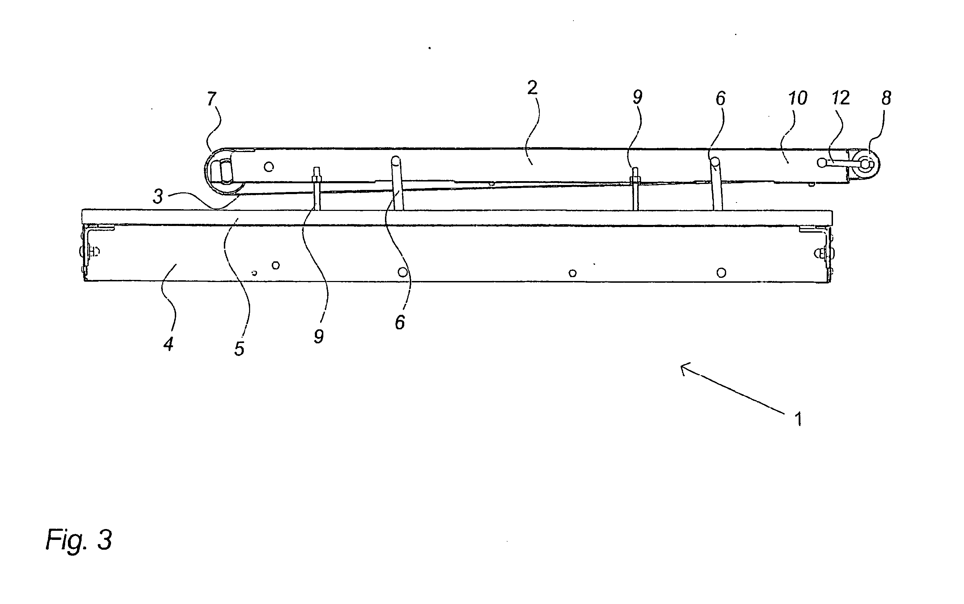

The same part of the conveyor system 1 is shown again in fig. 3, this time in a side view. Apart from the parts already shown in the previous figures, this view also illustrates that the conveyor belt 3 can be tightened or loosened, for instance for replacement, by means of one or more extendable arms 12 arranged between the frame 10 of the conveyor module 2 and the idler pulley 8 and/or the drive pulley 7 for displacement of the pulley(s) in the direction of conveyance of the conveyor belt 3.

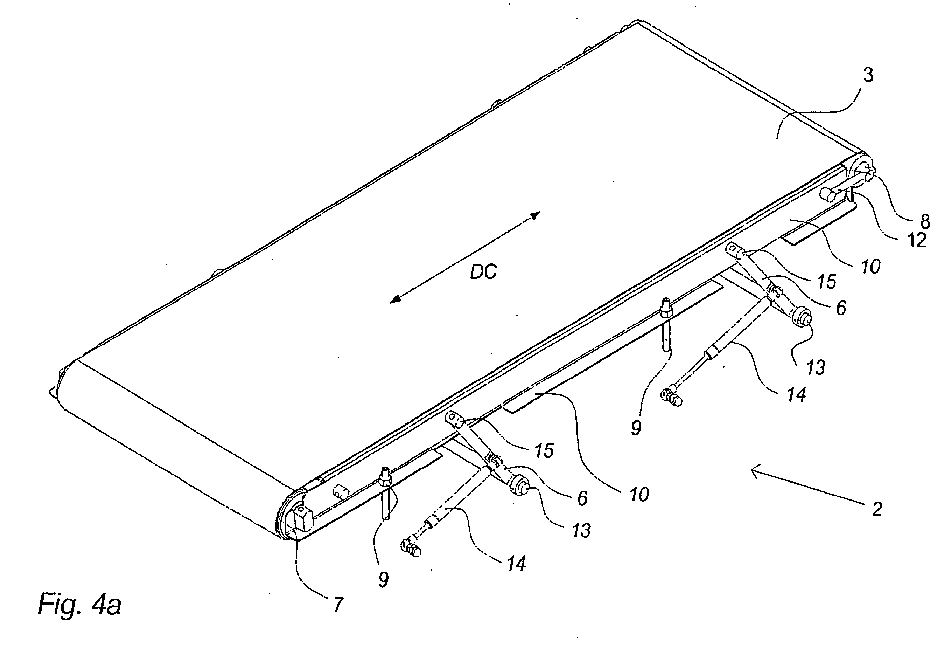

Fig. 4a is a perspective view from one side of a conveyor module 2 and a lever system 6, 13, 14 of a conveyor system 1 according to the preferred embodiment of the invention also illustrated in the previous figures. This figure illustrates how the lever arms 6 are mounted on axles 13, which are rotatably supported by the system framework (not shown in this figure). It is also illustrated how the motion of the lever arms 6 between a first (substantially horizontal) position and a second (substantially vertical) position in which positions the conveyor system 1 is in an operational mode and a service mode, respectively, may be performed using one or more pneumatic springs and/or linear actuators 14. On top of each of the lever arms 6 is seen the one end of the two supporting bars 15, respectively, which penetrate the frame 10 and carry the conveyor module 2.

Fig. 4b shows the same conveyor module 2 and lever system 6, 13, 14, 15 as illustrated in fig. 4a, only seen from the other side. On this side of the conveyor module 2, the other end of each of the supporting bars 15 is visible. Furthermore, it is illustrated how a bar 16 is connected to the end of each of the lever system axles 13 opposite the lever arms 6 (not shown in this figure), respectively, so that these bars 16 rotate with the lever arms 6.

When the lever arms 6 are in a substantially vertical position and the conveyor system 1 is in a service mode, the bars 16 are in a substantially horizontal position, thus being rotated away from the conveyor module 2, leaving the maximum possible room for sideways access to the conveyor module 2 for service and maintenance work or replacement of the complete conveyor module 2.

When, on the other hand, the lever arms 6 are in a substantially horizontal position and the conveyor system 1 is in an operational mode, the bars 16 are in a substantially vertical position, function as supporting platforms onto which the short adjustable supporting legs 11 can rest in order to obtain resulting heights of the short adjustable supporting 11 legs and the respective supporting platforms 16 corresponding to the heights of the longer adjustable supporting legs 9 at the other side of the frame 10.

**List of reference numbers**
- 1.: Conveyor system
- 2.: Conveyor module
- 3.: Conveyor belt
- 4.: System framework
- 5.: Covering
- 6.: Lever arm
- 7.: Drive pulley
- 8.: Idler pulley
- 9.: Long adjustable supporting leg
- 10.: Frame of conveyor module
- 11.: Short adjustable supporting leg
- 12.: Extendable arm for displacement of idler pulley
- 13.: Lever system axle
- 14.: Linear actuator for lever system
- 15.: Supporting bar for conveyor module
- 16.: Supporting platform for short adjustable supporting leg

## Claims

1. A conveyor system (1) comprising
a system framework (4),
a covering (5) and
a conveyor module (2) comprising
a frame (10),
a drive pulley (7) rotatably supported by the frame (10),
an idler pulley (8) rotatably supported by the frame (10) and
a continuous conveyor belt (3) mounted around the drive pulley (7) and the idler pulley (8) for being rotated when the drive pulley (7) is rotated,
the conveyor module (2) and the covering (5) being mounted on the system framework (4) and, when the conveyor system (1) is in an operational mode, the covering (5) being placed adjacent to the conveyor module (2) covering at least the two sides of the conveyor module (2) parallel to the direction of conveyance of the conveyor belt (3),
**characterized in that**,
the conveyor module (2) is detachably mounted on two or more substantially parallel bars (15) penetrating the frame (10) in such a way that the conveyor module (2) can be removed as a whole from the bars (15),
wherein one end of each of the substantially parallel bars (15) is connected to a first end of a respective lever arm (6), a second end of which lever arm (6) is connected to the system framework (4) in such a way that, when each of the lever arms (6) is in a first position, the conveyor system (1) is in an operational mode and, when each of the lever arms (6) is in a second position, the conveyor system (1) is in a service mode in which the conveyor module (2) is elevated in relation to the covering (5), thus opening for sideways access to the conveyor module (2) for maintenance work or for replacement of the conveyor module (2) as a whole, all of the lever arms (6) being positioned to the same side of the conveyor module (2).

2. A conveyor system according to claim 1, wherein the substantially parallel bars (15) are substantially horizontal.

3. A conveyor system according to any of claims 1 or 2, wherein the substantially parallel bars (15) are oriented in a direction substantially perpendicular to the direction of conveyance of the conveyor belt (3).

4. A conveyor system according to any of the preceding claims, wherein the drive pulley (7) is driven by a drum motor arranged inside the drive pulley (7).

5. A conveyor system according to any of the preceding claims, wherein the motion of the lever arms (6) between their first and second positions is performed using one or more pneumatic springs and/or linear actuators (14).

6. A conveyor system according to any of the preceding claims, wherein the frame (10) is provided with one or more individually adjustable supporting legs (9, 11) on both sides of the conveyor belt (3) for enabling vertical alignment of the conveyor belt (3) when the conveyor system (1) is in an operational mode.

7. A conveyor system according to claim 6, wherein the one or more supporting legs (11) on the side of the frame (10) opposite the lever arms (6) are shortened in order to enable removal of the conveyor belt (3) from the conveyor module (2) without first removing the supporting legs (6), each of these shortened supporting legs (6) standing, when the conveyor system (1) is in an operational mode, on a respective supporting platform (16) of the system framework (4) arranged in such a way that, by suitable adjustment of the supporting legs (6), resulting heights of the shortened supporting legs (6) and the respective supporting platforms (16) corresponding to the heights of the non-shortened supporting legs (6) at the other side of the frame (10) can be obtained.

8. A conveyor system according to claim 7, wherein the supporting platforms (16) are formed by bars (15) being rotationally coupled at one end to the lever arms (6) so that when the lever arms (6) are rotated to their second positions, bringing the conveyor system (1) into a service mode, the supporting platforms (16) are rotated away from the conveyor module (2), in order not to be in the way for maintenance work or for replacement of the conveyor module (2) as a whole.

9. A conveyer system according to any of claims 1-4, wherein the conveyor system (1) can be brought to a service mode by lifting the covering (5) off the system framework (4), thus opening for sideways access to the conveyer module (2) for maintenance work or for replacement of the conveyer module (2) as a whole.

10. A counter system comprising a conveyor system (1) according to any of claims 1-9.

## Patentansprüche

1. Förderersystem (1), umfassend:
einen Systemrahmen (4),
eine Abdeckung (5) und
ein Förderermodul (2), umfassend
einen Rahmen (10),
eine Antriebstrommel (7), die durch den Rahmen (10) drehbar gelagert ist, eine Umlenkrolle (8), die durch den Rahmen (10) drehbar gelagert ist, und ein Endlosförderband (3), das um die Antriebstrommel (7) und die Umlenkrolle (8) herum montiert ist, um gedreht zu werden, wenn die Antriebstrommel (7) gedreht wird,
wobei das Förderermodul (2) und die Abdeckung (5) an dem Systemrahmen (4) montiert sind und, wenn das Förderersystem (1) in einem Betriebsmodus ist, die Abdeckung (5) angrenzend an bzw. benachbart zu dem Förderermodul (2) platziert ist, wobei zumindest zwei Seiten des Förderermoduls (2) parallel zu der Förderrichtung des Förderbands (3) abgedeckt sind,
**dadurch gekennzeichnet, dass**
das Förderermodul (2) abnehmbar an zwei oder mehreren im Wesentlichen parallelen Stangen (15) montiert ist, die den Rahmen (10) auf eine solche Weise durchdringen, dass das Förderermodul (2) als Ganzes von den Stangen (15) entfernt werden kann,
wobei ein Ende von jeder der im Wesentlichen parallelen Stangen (15) mit einem ersten Ende eines jeweiligen Hebelarms (6) verbunden ist, ein zweites Ende des Hebelarms (6) mit dem Systemrahmen (4) auf eine solche Weise verbunden ist, dass, wenn jeder der Hebelarme (6) in einer ersten Position ist,
das Förderersystem (1) in einem Betriebsmodus ist, und wenn jeder der Hebelarme (6) in einer zweiten Position ist, das Förderersystem (1) in einem Service- bzw. Wartungsmodus ist, in dem das Förderermodul (2) in Beziehung zu der Abdeckung (5) angehoben bzw. erhöht ist, wodurch ein seitlicher Zugriff auf das Förderermodul (2) für Wartungsarbeiten oder zum Austausch des Förderermoduls (2) als Ganzes geöffnet bzw. freigegeben ist, wobei alle Hebelarme (6) auf bzw. zu der gleichen Seite des Förderermoduls (2) positioniert sind.

2. Förderersystem nach Anspruch 1, wobei die im Wesentlichen parallelen Stangen (15) im Wesentlichen horizontal sind.

3. Förderersystem nach einem der Ansprüche 1 oder 2, wobei die im Wesentlichen parallelen Stangen (15) in einer Richtung im Wesentlichen senkrecht zu der Förderrichtung des Förderband (3) ausgerichtet sind.

4. Förderersystem nach einem der vorhergehenden Ansprüche, wobei die Antriebstrommel (7) von einem Trommelmotor angetrieben wird, der im Inneren der Antriebstrommel (7) angeordnet ist.

5. Förderersystem nach einem der vorhergehenden Ansprüche, wobei die Bewegung der Hebelarme (6) zwischen ihrer ersten und zweiten Position unter Verwendung einer oder mehrerer pneumatischer Federn und/oder linearen Aktuatoren (14) durchgeführt wird.

6. Förderersystem nach einem der vorhergehenden Ansprüche, wobei der Rahmen (10) mit einem oder mehreren individuell verstellbaren Stütz- bzw. Trägerbeinen (9, 11) auf beiden Seiten des Förderbands (3) versehen ist, um eine vertikale Ausrichtung des Förderbands (3) zu ermöglichen, wenn das Förderersystem (1) in einem Betriebsmodus ist.

7. Förderersystem nach Anspruch 6, wobei das eine oder die mehreren Trägerbeine (11) auf der Seite des Rahmens (10) gegenüberliegend bzw. entgegengesetzt zu den Hebelarmen (6) verkürzt sind, um ein Entfernen des Förderbands (3) von dem Förderermodul (2) zu ermöglichen, ohne zunächst die Trägerbeine (6) zu entfernen, wobei jedes dieser verkürzten Trägerbeine (6), wenn das Förderersystem (1) in einem Betriebsmodus ist, auf einer jeweiligen Stütz- bzw. Trägerplattform (16) des Systemrahmens (4) steht, der auf eine solche Weise angeordnet ist, dass durch eine geeignete Einstellung der Trägerbeine (6) resultierende Höhen der verkürzten Trägerbeine (6) und der jeweiligen Trägerplattformen (16) entsprechend den Höhen der nicht verkürzten Trägerbeine (6) an der anderen Seite des Rahmens (10) erhalten werden können.

8. Förderersystem nach Anspruch 7, wobei die Trägerplattformen (16) durch Stangen (15) gebildet sind, die drehbar an einem Ende der Hebelarme (6) gekoppelt sind, so dass, wenn die Hebelarme (6) zu ihren zweiten Positionen gedreht sind, was das Förderersystem (1) in einen Wartungsmodus bringt, die Trägerplattformen (16) von dem Förderermodul (2) weggedreht werden, um für Wartungsarbeiten oder für den Austausch des Förderermoduls (2) als Ganzes nicht im Weg zu sein.

9. Förderersystem nach einem der Ansprüche 1-4, wobei das Förderersystem (1) in einem Wartungsmodus gebracht werden kann, indem die Abdeckung (5) von dem Systemrahmen (4) abgehoben wird, wodurch ein seitlicher Zugriff auf das Förderermodul (2) für Wartungsarbeiten oder zum Austausch des Förderermoduls (2) als Ganzes geöffnet bzw. freigegeben wird.

10. Zählersystem umfassend ein Förderersystem (1) nach einem der Ansprüche 1-9.

## Revendications

1. Système de transporteur (1) comprenant
une charpente de système (4),
un recouvrement (5) et
un module de transporteur (2) comprenant
un châssis (10),
une poulie d'entraînement (7) supportée à rotation par le châssis (10),
un tambour mené (8) supporté à rotation par le châssis (10) et
une courroie de transporteur continue (3) montée autour de la poulie d'entraînement (7) et du tambour mené (8) pour être tournée lorsque la poulie d'entraînement (7) est tournée,
le module de transporteur (2) et le recouvrement (5) étant montés sur la charpente de système (4) et, lorsque le système de transporteur (1) est dans un mode opérationnel, le recouvrement (5) étant placé de manière adjacente au module de transporteur (2) recouvrant au moins les deux côtés du module de transporteur (2) parallèlement à la direction de transport de la courroie de transporteur (3),
**caractérisé en ce que**
le module de transporteur (2) est monté de manière amovible sur deux barres essentiellement parallèles (15) ou plus pénétrant dans le châssis (10) de telle sorte que le module de transporteur (2) puisse être retiré dans son intégralité des barres (15),
dans lequel une extrémité de chacune des barres essentiellement parallèles (15) est connectée à une première extrémité d'un bras de levier respectif (6), bras de levier (6) dont une seconde extrémité est connectée à la charpente de système (4) de telle sorte que, lorsque chacun des bras de levier (6) est dans une première position, le système de transporteur (1) est dans un mode opérationnel et, lorsque chacun des bras de levier (6) est dans une seconde position, le système de transporteur (1) est dans un mode d'entretien dans lequel le module de transporteur (2) est élevé par rapport au recouvrement (5), s'ouvrant ainsi pour un accès latéral au module de transporteur (2) pour du travail de maintenance ou pour le remplacement du module de transporteur (2) dans son intégralité, l'ensemble des bras de levier (6) étant positionnés sur le même côté du module de transporteur (2).

2. Système de transporteur selon la revendication 1, dans lequel les barres essentiellement parallèles (15) sont essentiellement horizontales.

3. Système de transporteur selon l'une quelconque des revendications 1 ou 2, dans lequel les barres essentiellement parallèles (15) sont orientées dans une direction essentiellement perpendiculaire à la direction de transport de la courroie de transporteur (3).

4. Système de transporteur selon l'une quelconque des revendications précédentes, dans lequel la poulie d'entraînement (7) est entraînée par un moteur-tambour agencé à l'intérieur de la poulie d'entraînement (7).

5. Système de transporteur selon l'une quelconque des revendications précédentes, dans lequel le mouvement des bras de levier (6) entre leurs première et seconde positions est réalisé en utilisant un ou plusieurs ressorts pneumatiques et/ou actionneurs linéaires (14).

6. Système de transporteur selon l'une quelconque des revendications précédentes, dans lequel le châssis (10) est pourvu d'une ou plusieurs jambes de support individuellement ajustables (9, 11) des deux côtés de la courroie de transporteur (3) pour permettre l'alignement vertical de la courroie de transporteur (3) lorsque le système de transporteur (1) est dans un mode opérationnel.

7. Système de transporteur selon la revendication 6, dans lequel la ou les jambes de support (11) sur le côté du châssis (10) opposé aux bras de levier (6) sont raccourcies afin de permettre le retrait de la courroie de transporteur (3) du module de transporteur (2) sans d'abord retirer les jambes de support (6), chacune de ces jambes de support raccourcies (6) se tenant, lorsque le système de transporteur (1) est dans un mode opérationnel, sur une plate-forme de support respective (16) de la charpente de système (4) agencée de telle sorte que, par l'ajustement approprié des jambes de support (6), des hauteurs résultantes des jambes de support raccourcies (6) et des plates-formes de support respectives (16) correspondant aux hauteurs des jambes de support non raccourcies (6) de l'autre côté du châssis (10) peuvent être obtenues.

8. Système de transporteur selon la revendication 7, dans lequel les plates-formes de support (16) sont formées par des barres (15) qui sont raccordées à rotation à une extrémité aux bras de levier (6) de sorte que, lorsque les bras de levier (6) sont tournés vers leurs secondes positions, amenant le système de transporteur (1) dans un mode d'entretien, les plates-formes de support (16) sont tournées à l'écart du module de transporteur (2) afin de ne pas gêner pour du travail de maintenance ou pour le remplacement du module de transporteur (2) dans son intégralité.

9. Système de transporteur selon l'une quelconque des revendications 1 à 4, dans lequel le système de transporteur (1) peut être amené dans un mode d'entretien en soulevant le recouvrement (5) de la charpente de système (4), s'ouvrant ainsi pour un accès latéral au module de transporteur (2) pour du travail de maintenance ou pour le remplacement du module de transporteur (2) dans son intégralité.

10. Système de comptoir comprenant un système de transporteur (1) selon l'une quelconque des revendications 1 à 9.
